**Europäisches Patentamt**

**European Patent Office**

**Office européen des brevets**

(19)

(11) Veröffentlichungsnummer: **0 023 643**
**B1**

(12) # EUROPÄISCHE PATENTSCHRIFT

(45) Veröffentlichungstag der Patentschrift:
**18.04.84**

(21) Anmeldenummer: **80104210.2**

(22) Anmeldetag: **18.07.80**

(51) Int. Cl.³: **G 01 B 11/16**, G 01 N 3/06

(54) **Verfahren und Vorrichtung zur photoelektrischen berührungslosen Messung von Dehnungsabläufen.**

(30) Priorität: **02.08.79 DE 2931332**

(43) Veröffentlichungstag der Anmeldung:
**11.02.81 Patentblatt 81/6**

(45) Bekanntmachung des Hinweises auf die Patenterteilung:
**18.04.84 Patentblatt 84/16**

(84) Benannte Vertragsstaaten:
**CH GB LI**

(56) Entgegenhaltungen:
**DE - A - 1 942 998**
**DE - A - 2 631 663**
**DE - A - 2 845 124**
**GB - A - 1 524 239**
**US - A - 4 031 746**
**US - A - 4 129 384**

(73) Patentinhaber: **MFL Prüf- und Messysteme GmbH,
Carl-Benz-Strasse 3, D-6707 Schifferstadt (DE)**

(72) Erfinder: **Hock, Fromund, Prof.Dr.-Ing., Bergstrasse 12,
D-3003 Ronneberg 3 (DE)**
Erfinder: **Chrestin, Dirk, Dipl.-Phys.,
F.-Wallbrecht-Strasse 6-8, D-3000 Hannover 1 (DE)**
Erfinder: **Ringer, Kurt, Dipl.-Phys., Lessingstrasse 5,
D-3000 Hannover 91 (DE)**
Erfinder: **Marlinghaus, Jürgen, Dr.-Ing.,
Berlinerstrasse 39, D-6831 Plankstadt (DE)**
Erfinder: **Funk, Egon, Dipl.-Ing., Turnerstrasse 116a,
D-6900 Heidelberg (DE)**
Erfinder: **Dobbertin, Ulrich, Dürerstrasse 3,
D-6831 Plankstadt (DE)**

(74) Vertreter: **Fischer, Wolf-Dieter, Dipl.-Ing., Patentanwälte
Dipl.-Ing. A.H. Fischer Dipl.-Ing. W.D. Fischer
Kurfürstenstrasse 32, D-6700 Ludwigshafen/Rhein (DE)**

## Verfahren und Vorrichtung zur photoelektrischen berührungslosen Messung von Dehnungsabläufen

Die Erfindung bezieht sich auf ein Verfahren zur photoelektrischen berührungslosen Messung von mit Ortsverschiebungen verbundenen Dehnungsabläufen, insbesondere im Zugversuch, an lichtstreuenden, opaken oder transparenten Werkstoff- bzw. Objektoberflächen gemäss Oberbegriff des ersten Patentanspruches. Die Erfindung betrifft ferner eine Anordnung zur Ausübung dieses Verfahrens, enthaltend die im Oberbegriff des fünfzehnten Patentanspruches angegebenen Komponenten.

In dem Dokument DE-A-2 631 633 ist ein Verfahren zur berührungslosen Messung relativer Längenänderung auf der Basis von Laufzeitvergleichsmessungen von Laser-Reflexen bei kontinuierlicher Abtastung eines Messbereiches bzw. einer Abtastspur beschrieben. Bei diesem bekannten Verfahren wird die Längenmessung für die gesamte Länge des Messbereiches auf eine analoge Zeitmessung zurückgeführt. Hierbei ergibt sich, dass bei nichtlinearer Längenübertragung aus dem Objektraum in den Bild- respektive Zeitbereich Messfehler entstehen. Darüber hinaus muss die Objektoberfläche in geeigneter Weise markiert werden. Bei dem bekannten Verfahren, nach welchem eine indirekte Längenmessung über eine Laufzeitmessung erfolgt, müssen an die Zeitlinearität des Abtastweges hohe Anforderungen gestellt werden. Dies gilt um so mehr, als bei der Messung von Dehnungsabläufen die Relativlage zwischen Messkopf oder dergleichen sowie der Objektoberfläche sich sehr leicht ändern kann. Derartige hohe Anforderungen können in der Praxis sowohl aus mechanischen als auch aus optischen Gründen, es sei beispielhaft auf den Tangensfehler bei Spiegelpolygonen verwiesen, wenn überhaupt, dann nur mit einem hohen Aufwand erfüllt werden.

Ferner ist in dem Dokument DE-A-1 942 988 ein Verfahren zur berührungslosen Dehnungsmessung beschrieben, bei welchem eine Markierung der Objektoberfläche nicht vorgenommen wird. Die Signalgewinnung erfolgt hierbei mittels Photoplatten oder dergleichen, wodurch ein hoher Zeitaufwand bedingt ist. Bei diesem Verfahren wird weiterhin die gesamte Objektoberfläche mit kohärenter Strahlung ausgeleuchtet, wobei die Kohärenz, eine wesentliche Voraussetzung darstellt. Schliesslich wird bei diesem Verfahren über die gesamte, vergleichsweise grosse Abtastspur abgetastet und eine Anpassung an die jeweiligen Messbedingungen ist in der Praxis kaum durchführbar.

Der Erfindung liegt daher die Aufgabe zugrunde, ein einfaches und leicht zu handhabendes Verfahren vorzuschlagen, welches mit einem geringen Zeitaufwand durchführbar ist und eine hohe Messgenauigkeit aufweist. Ferner liegt der Erfindung die Aufgabe zugrunde, eine zuverlässige und funktionsgerechte Anordnung zur Ausübung des vorgeschlagenen Verfahrens anzugeben.

Zur Lösung dieser Aufgabe sind bei dem erfindungsgemässen Verfahren die im Kennzeichen des ersten Patentanspruches angegebenen fünf Verfahrensschritte durchzuführen. Nach dem ersten Verfahrensschritt wird vom Abtastvorgang gesteuert zumindest ein Bezugsimpuls erzeugt, um eine definierte Zuordnung des Abtastflecks zu einer Position auf der Objektoberfläche festzulegen. Eine Markierung der Objektoberfläche ist somit nicht erforderlich und es ist dennoch eine definierte Positionsbestimmung des Abtastflecks in jeder Phase des Messvorganges sichergestellt. Nach dem zweiten Verfahrensschritt werden pro Abtastperiode wenigstens zwei gegeneinander verschobene Signalausschnitte abgespeichert. Diesen Signalausschnitten entsprechen in der Abtastspur Abschnitte mit vorgebbarer Länge sowie mit vorgebbarem Abstand ihrer Zentren. Hierdurch wird nicht nur eine Vereinfachung eines elektronischen Auswertegerätes, insbesondere hinsichtlich Speicherkapazität, erreicht, sondern es wird besonders zweckmässigerweise eine optimale Anpassung an die jeweiligen Messbedingungen ermöglicht. Der Abstand sowie die Längen der Abschnitte bzw. der Signalausschnitte können in geeigneter Weise vorgegeben werden, um nachfolgend zuverlässig die erforderlichen Korrelationssignale ableiten zu können. Nach dem dritten Verfahrensschritt werden die in der jeweiligen Abtastperiode erfassten Signalausschnitte mit abgespeicherten Signalausschnitten einer vorhergehenden Abtastperiode korreliert. Die hierbei abgeleiteten Korrelationssignale entsprechen jeweils den Ortsverschiebungen, welche die Abtastspurabschnitte in der Zeit zwischen der vorhergehenden Abtastperiode und der jeweiligen Abtastperiode erfahren haben. Aus den pro Abtastperiode abgeleiteten Korrelationssignalen wird gemäss dem vierten Verfahrensschritt die Differenz gebildet, wodurch auch eventuelle Lageänderungen des Messobjektes bezüglich der Beleuchtungseinrichtung, Projektionsoptik usw. eliminiert werden. Unter Berücksichtigung der Abstände der genannten Abtastspurabschnitte ergibt sich folglich die Dehnungsänderung, und zwar bezogen auf die genannte vorhergehende Abtastperiode. Schliesslich wird gemäss dem fünften Verfahrensschritt aus den in den jeweiligen Abtastperioden ermittelten Dehnungsänderungen der Dehnungsablauf insgesamt rekonstruiert, welcher dann analog oder digital abgespeichert werden kann oder aber der weiteren Auswertung oder Regelzwecken zuführbar ist.

In dem Patentanspruch 15 ist eine Anordnung zur Ausübung des erfindungsgemässen Verfahrens angegeben. Diese Anordnung enthält in bekannter Weise zunächst ein Beleuchtungs- und Projektionssystem, welches ein strahlablenkendes optisches Bauelement sowie ein abbildendes System aufweist. Ferner ist ein optisches Empfangssystem vorgesehen, welchem ein optisch-elektrischer Umformer zum Empfang der von der Objektoberfläche modulierten Signalen nachgeschaltet ist. Zur Lösung der eingangs angegebenen Aufgabe wird gemäss Kennzeichen des fünfzehnten Patentanspruches vorgeschlagen, dass die bildseitige Apertur des genannten Beleuchtungs- und Projektionssystems an den beugungsbegrenzten Abtastfleckdurchmesser angepasst ist, wobei die freie Öffnung des abbildenden Systems zumindest in der Abtastrichtung dem Prüfbereich der Objektoberfläche angepasst ist. Ferner ist die dem genannten abbildenden System nachgeordnete Objektoberfläche normal zu der Richtung der telezentrisch geführten Hauptstrahlen der Projektionsbündel angeordnet und es ist schliesslich eine Anordnung zur Erzeugung des Bezugsimpulses vorgesehen.

Weitere wesentliche Merkmale der Erfindung ergeben sich aus den übrigen Patentansprüchen in Verbindung mit dem nachfolgend anhand der Zeichnung erläuterten Ausführungsbeispiel.

Es zeigen:

Fig. 1 ein Gerät zur Messung von Dehnungsabläufen;

Fig. 2 ein Beispiel eines elektronischen Auswertegerätes.

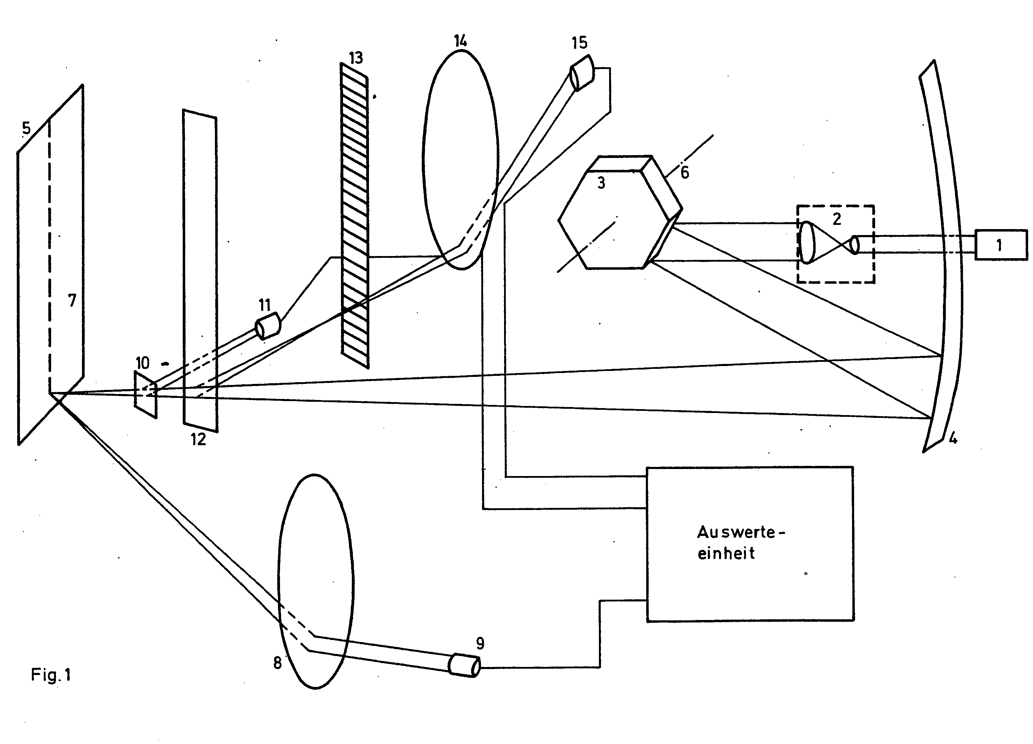

Ein Beispiel für ein erfindungsgemässes Gerät zur Messung von Dehnungsabläufen wird anhand der Fig. 1 erläutert.

Das Lichtbündel eines Lasers 1 wird über eine Strahlformoptik 2, einen Hohlspiegelstreifen 4 so auf die Probenfläche fokussiert, dass die sich in der Brennfläche des Hohlspiegelstreifens um die Achse 6 drehenden Polygonspiegelflächen 3 bewirken, dass eine Linie 7 auf der Probenoberfläche periodisch abgetastet wird. Bei dieser telezentrischen Strahlführung bleibt der Einfallswinkel des Abtastbündels für alle Punkte der abgetasteten Linie gleich.

Das Streulicht von der Probe wird von einer Empfangsoptik 8 gesammelt, in deren Brennebene eine Fotodiode 9 nur Licht erhält, das einem ausgewählten, für alle Objektstellen gleichen Raumwinkelbereich, der sehr klein gegen $4\pi$ ist, zugeordnet ist. Das in diesem Raumwinkelbereich empfangene Licht ist durch die statistischen Streueigenschaften des Objektes moduliert.

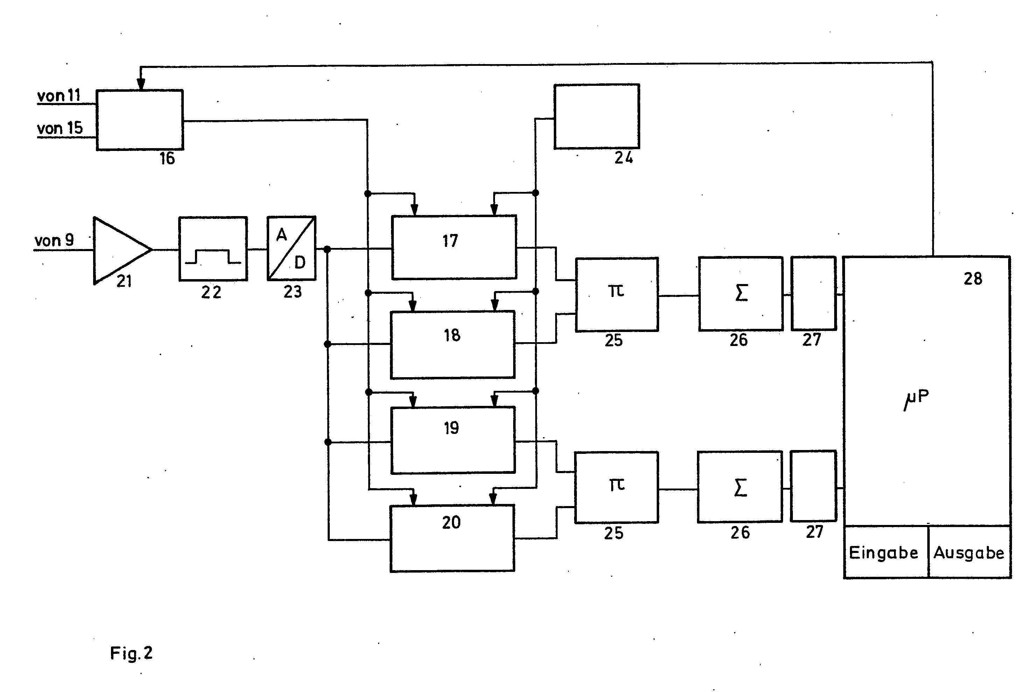

Über einen Strahlenteiler 10 wird am Anfang jeder Abtastzeile ein Teil des Lichtes auf eine Fotodiode 11 gegeben; über einen weiteren Strahlenteiler 12 wird der gesamten an der Dehnungsmessung beteiligten Abtastzeilenlänge entsprechend mit einem Teilbild des Abtastflecks der zur Objektoberfläche konjugiert gelegene Gittermassstab 13 synchron abgetastet. Bei Verwendung eines Laminar-Phasengitters mit $\lambda/2$-Phasenhub wird das Licht durch die Minimumstrahlkennzeichnung besonders ökonomisch mit scharfen Minima moduliert (Wolter Progress in Optics pp.). Das hindurchtretende periodisch modulierte Licht wird mit einer Linse 14 auf eine Fotodiode 15 gesammelt. Mit dem Signal der Fotodiode 11 wird ein Zähler rückgesetzt, der von der Diode 15 angesteuert, zu jedem Zeitpunkt innerhalb eines Abtastvorganges die Lage des Abtastflecks als Zählerstand enthält. Dieser Zähler ist Bestandteil des elektronischen Auswertegerätes welches anhand der Fig. 2 näher erläutert werden soll.

In diesem Gerät werden mit Hilfe des Zählerstandes zwei Abtastzeilenabschnitte gesteuert festgelegt, die bestimmten, anhand der Messaufgabe vorgewählten Intervallen der abgetasteten Linie entsprechen (Baugruppe 16). Jedem dieser Intervalle sind zwei Signalspeicher 17 und 18 bzw. 19 und 20 zugeordnet, in die die Signale der Fotodiode 9 nach Verstärkung 21, Filterung 22 und Digitalisierung 23 eingelesen werden. Dabei erhalten die Speicher 17 und 19 die «Probenvorgeschichte» als Signalzüge in einem bekannten Verformungszustand der Probe und die Speicher 18 und 20 den Istzustand der Probe während der darauffolgenden Abtastperioden. Nach jeder Einspeicherung werden die Inhalte der Speicher 17 und 18 bzw. 19 und 20 miteinander korreliert.

Die Berechnung der Korrelationsfunktion erfolgt seriell, d.h. eine Steuerlogik 24 liest die Speicher wiederholt mit definierter Adressendifferenz aus. Die Speicherausgänge werden in einem Multiplikator 25 miteinander multipliziert. Die Produkte werden über eine Ausleseperiode in einen Summierer 26 aufsummiert. Die Summenwerte und die zugehörigen Adressendifferenzen werden am Ende jeder Ausleseperiode in einen Zwischenspeicher 27 eingelesen, auf den in geeigneter Weise ein Mikroprozessor 28 Zugriff hat. Dieser wertet die Korrelationsergebnisse aus, berechnet daraus die Verlagerungen der betreffenden Probenintervalle und aus diesen die relative Dehnung des Probenabschnittes zwischen den vermessenen Intervallen, und gibt sie seriell und parallel in binärer Form zur weiteren Verarbeitung bzw. in BCD-codierter Form zur Anzeige aus.

Weiterhin übernimmt der Mikroprozessor die folgenden Steuerfunktionen für die Korrelationselektronik:

a) Anhand von aussen vorgegebener Probendaten, die auch von geeigneten zusätzlichen Messvorrichtungen in binärer Form übernommen werden können, wird die Lage der abzuspeichernden Abtastspurabschnitte berechnet und als Zählerkoinzidenzwerte an die Baugruppe 16 ausgegeben.

b) Bei Überschreitung eines Grenzwertes für eine Verlagerung eines Abtastspurabschnittes wird für Anfang und Ende des Abtastintervalls ein korrigierter Wert berechnet und an Baugruppe 16 ausgegeben.

c) Zu Beginn der Messung wird das Einlesen in die Referenzspeicher durch einen Impuls an Baugruppe 16 veranlasst.

d) Falls für eines der ausgewerteten Intervalle die Korrelationsfaktoren unterhalb einer vorgegebenen Grenze liegen, wird durch einen Impuls an Baugruppe 16 veranlasst, dass der betreffende Referenzspeicher neu eingelesen wird.

**Patentansprüche**

1. Verfahren zur photoelektrischen berührungslosen Messung von mit Ortsverschiebungen verbundenen Dehnungsabläufen, insbesondere im Zugversuch, an lichtstreuenden, opaken oder transparenten Werkstoff- bzw. Objektoberflächen, wobei mittels einer Beleuchtungseinrichtung mit einer thermischen oder quantenoptischen Strahlungsquelle ein Beleuchtungsstrahl hoher Strahlendichte erzeugt wird, wobei ferner mittels einer Projektionsoptik auf der Objektoberfläche ein Abtastfleck erzeugt wird, dessen Abmessungen klein gegenüber dem Objektbereich sind, längs dessen die Dehnung gemessen wird, wobei ferner im Projektionsstrahlengang ein Strahlablenker den Abtastfleck auf der Objektoberfläche entlang einer reproduzierbaren Abtastspur mit einer derart hohen Abtastfrequenz führt, dass Dehnungsänderungen zwischen aufeinanderfolgenden Abtastperioden sehr klein gegenüber der Gesamtdehnung sind, und wobei einer Signalverarbeitungselektronik über einen optisch-elektrischen Umformer ein vom Objekt moduliertes Signal entsprechend einem definierten Raumwinkelbereich der Streustrahlung des Objektes zugeführt wird, dadurch gekennzeichnet, dass

1) vom Abtastvorgang gesteuert zumindest ein Bezugsimpuls erzeugt wird, mittels welchem ohne Markierungen auf dem Objekt eine definierte Zuordnung des Abtastflecks zu einer Position auf der Objektoberfläche festgelegt wird,

2) aus dem vom Objekt modulierten Signal in Abhängigkeit von dem genannten Bezugsimpuls pro Abtastperiode wenigstens zwei gegeneinander verschobene Signalausschnitte abgespeichert werden, welchen in der Abtastspur Abschnitte mit vorgebbarer Länge sowie mit vorgebbarem Abstand ihrer Zentren entsprechen,

3) dass die genannten Signalausschnitte mit entsprechenden, in einer vorhergehenden Abtastperiode abgespeicherten Signalausschnitten korreliert werden und dass daraus den Ortsverschiebungen der genannten Abtastspurabschnitte entsprechende Korrelationssignale abgeleitet werden,

4) dass aus der Differenz der Korrelationssignale unter Berücksichtigung der Abstände der Abtastspurabschnitte die Dehnungsänderung bezogen auf die genannte vorhergehende Abtastperiode ermittelt wird

5) und dass aus einer Folge von in einer Anzahl von Abtastperioden derart ermittelten Dehnungsänderungen der Dehnungsablauf rekonstruiert und analog oder digital abgespeichert bzw. der weiteren Auswertung oder Regelzwecken zugeführt wird.

2. Verfahren nach Anspruch 1, dadurch gekennzeichnet, dass eine strahlungssammelnde Optik, deren Komponenten zumindest teilweise mit den Komponenten der Projektions- und Lichtablenkoptik identisch sein können, entlang der Abtastspur von der Objektoberfläche gestreute Strahlung sammelt und dass eine schnellreagierende photoelektrische Umsetzerfläche die Strahlungserregung örtlich bzw. über einen ausgewählten, gegenüber $4\pi$ kleinen Raumwinkel im Objektraum integrierend in ein elektrisches zeitserielles Signal umsetzt.

3. Verfahren nach Anspruch 2, dadurch gekennzeichnet, dass die Umsetzung mit der genannten Umsetzerfläche in einer Querschnittsfläche der strahlungssammelnden Optik erfolgt, in der ein Punkt in dieser Fläche einer dadurch vorgegebenen Strahlrichtung im Objektraum entspricht.

4. Verfahren nach Anspruch 2 oder 3, dadurch gekennzeichnet, dass die ortsabhängigen, elektrischen zeitseriellen Signale durch ein Bandfilter frequenzbegrenzt sind, welches Ortsperioden, die gross gegenüber der Abtastfleckgrösse sind, nicht mehr überträgt, und dass die obere Durchlassgrenzfrequenz des Bandfilters als Anti-Aliasing-Filter bezogen auf einen Signal-Sample-Vorgang steuernde, zeitdiskrete Taktsignale wirkt.

5. Verfahren nach Anspruch 1 und 4, dadurch gekennzeichnet, dass die modulierten Signale über Schwellwertbewertung in amplitudendiskrete Signale umgesetzt werden und mit Hilfe der Taktsignale dem Korrelator zeitdiskret zugeführt werden.

6. Verfahren nach Anspruch 5, dadurch gekennzeichnet, dass die modulierten Signale in binärer Form in amplitudendiskrete Signale umgesetzt werden.

7. Verfahren nach Anspruch 1, dadurch gekennzeichnet, dass vom Abtastvorgang gesteuert, den Strahlungsfleckpositionen zugeordnete, ortsdiskrete Taktsignale erzeugt werden.

8. Verfahren nach Anspruch 7, dadurch gekennzeichnet, dass die ortsdiskreten Taktsignale bezogen auf die Objektoberfläche gleichabständig sind.

9. Verfahren nach Anspruch 1 und 7, dadurch gekennzeichnet, dass zur Zeitdiskretisierung der modulierten Signale Taktsignale verwendet werden, die mit den strahlungsfleckpositionsabhängigen Taktsignalen in fester Phasen- oder Frequenzbeziehung stehen.

10. Verfahren nach Anspruch 1, 3 und 5, dadurch gekennzeichnet, dass eine Einspeicherung neuer Bezugswerte für die Signalkorrelation dann vorgenommen wird, wenn die Korrelationsfaktoren für die jeweiligen Abtastspurabschnitte einen vorgegebenen Absolutwert unterschritten haben.

11. Verfahren nach Anspruch 1, 4, 5 und 10, dadurch gekennzeichnet, dass der auszuwertende Abtastspurabschnitt verlegt wird, wenn die Korrelationsfaktoren einen vorgegebenen Absolutwert unterschreiten.

12. Verfahren nach Anspruch 1, 4, 5, 7, 10 und 11, dadurch gekennzeichnet, dass die Funktionen der Korrelationsbildung, der Maximierung der Korrelationsfunktionen, der Differenzbildung der Korrelationssignale der Verarbeitung und Speicherung des Dehnungsablaufes von einem programmierten Rechenautomaten übernommen werden.

13. Verfahren nach einem der Ansprüche 1 bis 12, dadurch gekennzeichnet, dass für die Verfolgung umformender oder zerstörender Belastungsvorgänge die Veränderung der regelungstechnisch jeweils maximierten Korrelationskoeffizienten für sich aneinander anschliessende oder überlappende Abtastspurabschnitte längs der Abtastspur ausgewertet, abgespeichert und einer eventuellen Weiterverarbeitung zugeführt wird, um Oberflächenbereiche mit Dehnungsanomalien bzw. plastischer Verformung quantitativ zu erfassen.

14. Verfahren nach einem der Ansprüche 1 bis 13, dadurch gekennzeichnet, dass zumindest zwei nebeneinanderliegende Abtastspuren im Wechsel abgetastet werden, so dass ein Dehnungsfeld aufgenommen werden kann.

15. Anordnung zur Ausübung des Verfahrens nach einem der Ansprüche 1 bis 14, enthaltend ein Beleuchtungs- und Projektionssystem (1, 2), welches ein strahlablenkendes optisches Bauelement (3) sowie ein abbildendes System (4) aufweist, und ferner enthaltend ein optisches Empfangssystem (8), dem ein optisch-elektrischer Umformer (9) zum Empfang der von der Objektoberfläche (7) modulierten Signale nachgeschaltet ist, dadurch gekennzeichnet, dass die bildseitige Apertur des Beleuchtungs- und Projektionssystems (1, 2) an den beugungsbegrenzten Abtastfleckdurchmesser angepasst ist, dass die freie Öffnung des abbildenden Systems (4) zumindest in der Abtastrichtung dem Prüfbereich auf der Objektoberfläche angepasst ist, dass die dem genannten System (4) nachgeordnete Objektoberfläche normal zu der Richtung der telezentrisch geführten Hauptstrahlen der Projektionsbündel liegt und dass eine Anordnung (10, 11) zur Erzeugung des Bezugsimpulses vorgesehen ist.

16. Anordnung nach Anspruch 15, dadurch gekennzeichnet, dass das strahlablenkende, optische Bauelement (3) den Ablenkungspunkt in der Brennfläche des abbildenden Systems (4) hat.

17. Anordnung nach Anspruch 15 oder 16, dadurch gekennzeichnet, dass das strahlablenkende, optische Bauelement ein akusto-optischer Ablenker oder ein Spiegelpolygon oder ein Drehspiegel ist.

18. Anordnung nach einem der Ansprüche 15 bis 17, dadurch gekennzeichnet, dass die Raumkurve, auf welcher der Fokus der Projektionseinrichtung die Abtastspur durchläuft, durch die Abbildungseigenschaften des optischen Beleuchtungs- und Projektionssystems (1, 2) der Probenoberflächenkrümmung angepasst ist.

19. Anordnung nach einem der Ansprüche 15 bis 18, dadurch gekennzeichnet, dass zwischen Probenoberfläche und optisch-elektrischem Umformer (9) ein spiegelndes oder brechendes Abbildungssystem (8) so angeordnet ist, dass der Umformer (9) sich über den gesamten Prüfbereich im Bereich des Maximums der Signalstreukeule befindet.

20. Anordnung nach einem der Ansprüche 15 bis 19, dadurch gekennzeichnet, dass zur Erzeugung von Taktsignalen ein Strahlenteiler (12) im Projektionsstrahlengang angeordnet ist, der eine zweite zur Objektoberfläche konjugierte Abtastspur erzeugt und dass in dieser zweiten Abtastspur eine strahlungsmodulierende Massverkörperung angeordnet ist und dass dieser ein weiterer optisch-elektrischer Umformer (15) nachgeordnet ist, der die durch die Massverkörperung beeinflusste Strahlungsintensität misst.

21. Anordnung nach einem der Ansprüche 15 bis 20, dadurch gekennzeichnet, dass die Massverkörperung ein Laminarphasengitter ist, dessen Gitterkonstante an den Abtastfleckdurchmesser angepasst ist und über die Minimumstrahlkennzeichnung eine Strahlungsmodulation bewirkt.

22. Anordnung nach einem der Ansprüche 15 bis 21, dadurch gekennzeichnet, dass im Projektionsstrahlengang ein Strahlenteiler (10) derart angeordnet ist, dass zu Beginn einer Abtastperiode Strahlung auf einen dritten optisch-elektrischen Umformer (11) geleitet wird, welcher den Bezugsimpuls erzeugt.

## Claims

1. Method for contactless photoelectric measurement of extension processes, particularly in the case of strain gauging in connection with light-scattering, opaque or transparent surfaces of materials or objects, in which a light pencil of high beam intensity is produced by means of a light generating device with a thermal or quantum optical source of radiation and in which there is produced on the surface of the subject and by means of an optical projection system a scanning spot of small dimension relatively to the area of the subject, along which the extension is measured, and moreover in which a light deflector in the path of the projection beam conducts the scanning spot on the surface of the subject along a reproducible sanning trace with a scanning frequency of an intensity sufficient for variations in extension between successive scanning periods to be small, relatively to the overal extension, and in which a signal processing electronic system, through an optical electronic transformer, has fed thereto a subject-modulated signal correlated at a defined dihedral angle part of the raditaion scattered by the subject, characterised by the fact that

1) at least one reference pulse is produced under the control of the scanning procedure and by means of this the scanning spot is positively associated with a position on the surface of the subject without any marking of the subject,

2) from the subject-modulated signal, in dependence on the aforesaid reference pulse and per scanning period, two mutually-staggered signal parts are emittet corresponding in the scanning trace to sections of predictable length and predictable spacing of their centres,

3) that the said signal parts are correlated with corresponding signal parts emitted in a preceding scanning period and that the position shifts of the the aforesaid parts of the scanning trace are derived from this,

4) that from the difference between the correlation signals and having regard to the spacing of the parts of the scanning trace the change in extension relatively to the aforesaid preceding scanning period is disclosed,

5) and that, from a succession of extension changes signalled in this way in a number of scanning periods the extension process is reconstructed and stored in analogue or digital fashion or put out for further exploitation or for regulating purposes.

2. Method according to claim 1, characterised by the fact that a radiation-collecting optical system, the components of which may be identical at least partially with the components of the projection and light deflecting optical parts, collects the radiation scattered along the scanning trace on the surface of the subject and that a rapid-reacting photoelectric conversion surface converts the excited radiation locally, or over a selected dihedral angle small relatively to $4\pi$ integrally in the area of the subject into an electrical time-serial signal.

3. Method according to claim 2, characterised by the fact that the conversion by said conversion surface takes place in a cross-sectional surface of the radiation-collecting optical system in which a point on this surface corresponds to a thereby predetermined direction of radiation travel in the area of the subject.

4. Method according to claim 2 or 3, characterised by the fact that the locality-dependent, electrical time serial signals are limited in frequency by a band-pass filter which will not transmit local periods which are large relatively to the size of the scanning trace, and that the upper admission frequency of the band-pass filter acts as an anti-aliasing filter relatively to a time-discrete timing signal fulfilling a signal-sampling function.

5. Method according to claim 1 and 4, characterised by the fact that the modulated signals are converted through threshold-evaluating means into amplitude-discrete signals and transmitted to the correlator in time-discrete condition with the help of the timing signals.

6. Method according to claim 5, characterised by the fact that the modulated signals in binary form are converted into amplitude-discrete signals.

7. Method according to claim 1, characterised by the fact that the locality-discrete timing signals associated with the radiation trace positions are produced under the control of the scanning process.

8. Method according to claim 7, characterised by the fact that the locality-discrete timing signals are equally spaced over the surfaces of the subject.

9. Method according to claim 1 and 7, characterised by the fact that for time discrimination between the modulated signals timing signals are used which are in firm phase — or frequency — relationship with the timing signals dependent on the position of the radiation spot.

10. Method according to claim 1, 3 and 5, characterised by the fact that a fresh reference value for the signal correlation is applied when the correlation factors for the prevailing parts of the scanning trace have fallen below a prescribed absolute value.

11. Method according to claim 1, 4, 5, and 10, characterised by the fact that the part of the scanning trace to be evaluated is displaced when the correlation factors fall below a prescribed absolute value.

12. Method according to claim 1, 4, 5, 7, 10 and 11, characterised by the fact that the functions of the establishment of a correlation, the maximising of the correlation functions, the differentiation of the correlation signals, and the processing and storage of the extension phenomena are taken over by a programmed computer.

13. Method according to one of claims 1 to 12, characterised by the fact that to investigate deformed or broken loadings, the variation of the prevailing regular technical maximised correlation coefficients for the successive or overlapping parts of the scanning trace is noted along this trace, is stored, and is sent for further processing to enable surface areas with extension abnormalities or plastic deformation to be recorded quantitatively.

14. Method according to one of claims 1 to 13, characterised by the fact that at least two adjoining scanning traces are successively scanned to establish an extension area.

15. An arrangement for implementing the method of one of claims 1 to 14, comprising a lighting and projection system (1, 2) having a beam-deflecting optical structural element (3) and an image-forming system (4), and further comprising an optical receiving system (8) following which is an optical electrical transformer (9) for receiving the signals modulated by the surface (7) of the subject, characterised by the fact that the image aperture of the lighting and projection system (1, 2) is adapted to the diffraction-limited scanning spot diameter, that the free opening of the image-forming system (4) is fitted to the surface of the subject at least in the scanning direction, that the surface of the subject following the aforesaid system (4) is disposed normally to the direction of the telecentrally-guided main strands of the projection light pencil, and that an arrangement (10, 11) is provided for producing the reference pulses.

16. An arrangement according to claim 15, characterised by the fact that the beam-deflecting optical structural element (3) has the point of deflection disposed on the focal surface of the image-forming system (4).

17. An arrangement according to claim 15 or 16, characterised by the fact that the beam-deflecting optical structural element is an accousto-optical deflector or a mirror polygon or a rotary mirror.

18. An arrangement according to one of claims 15 to 17, characterised by the fact that the spatial curve representing the scanning trace transcribed by the focus of the projection device is adapted to the curvature of the test surface by the image-forming qualities of the optical lighting and projection system (1, 2).

19. An arrangement according to one of claims 15 to 18, characterised by the fact that a reflecting or refracting image-forming system (8) is disposed between the test surface and the optical-electrical transformer (9) suchwise that over the whole of the test zone the transformer (9) is disposed in the area of maximum signal scatter.

20. An arrangement according to one of claims 15 to 19, characterised by the fact that a radiation-divider (12) is arranged in the path of the projection beam to engender timing signals, this divider producing a second scanning trace conjugated with the surface of the subject, that a radiation-modulated mass embodiment is arranged in this second scanning trace, and that there is disposed after this a further optical-electric transformer (15) which ignores the radiation intensity provoked by the mass embodiment.

21. An arrangement according to one of claims 15 to 20, characterised by the fact that the mass embodiment is a laminated phase screen the lattice constant of which is set to the scanning spot diameter and a radiation modulation is excited over the minimum radiation characteristic.

22. An arrangement according to one of claims 15 to 21, characterised by the fact that a radiation-divider (10) is arranged in the path of the projection beam suchwise that at the beginning of a scanning period radiation is directed to a third optical-electric transformer (11) to produce a reference pulse.

**Revendications**

1. Procédé de mesure photo-électrique sans contact de processus d'extension liés à des déplacements locaux, notamment dans les essais de traction, sur des surfaces de matériaux ou d'objets opaques ou transparents dispersant la lumière, selon lequel on produit un rayon d'éclairage de densité de rayonnement élevée au moyen d'un dispositif d'éclairage comportant une source de rayonnement thermique ou de l'optique des quanta, on produit en outre au moyen d'une optique de projection sur la surface de l'objet un spot d'exploration dont les dimensions sont petites par rapport à la zone de l'objet de long duquel on mesure l'extension, un déflecteur de rayon dans le faisceau de rayons guide le spot d'exploration sur la surface de l'objet le long d'une piste d'exploration reproductible avec une fréquence d'exploration telle que les variations d'extension entre des périodes d'exploration successives sont très petites par rapport à l'extension totale, et un signal modulé par l'objet, correspondant à une zone d'angle solide définie du rayonnement diffusé de l'objet, est amené à une électronique de traitement des signaux par l'intermédiaire d'un transformateur opto-électrique, caractérisé par le fait que

1) on produit au moins une impulsion de référence commandée par l'opération d'exploration, au moyen de laquelle on détermine sans marquage sur l'objet une affectation du spot d'exploration à une position sur la surface de l'objet,

2) à partir du signal modulé par l'objet, on met en mémoire en fonction de l'impulsion de référence précitée, au moins deux portions de signal décalées l'une par rapport à l'autre, par période d'exploration, auxquelles correspondent dans la piste d'exploration des portions de longueur prédéterminée et dont les centres sont à une distance prédéterminée,

3) les portions de signal précitées sont mises en corrélation avec des portions de signal correspondantes enregistrées dans une période d'exploration précédente, et on en dérive des signaux de corrélation correspondant aux déplacements locaux des portions de piste d'exploration précitées,

4) à partir de la différence des signaux de corrélation, on calcule, en tenant compte des distances entre elles des portions de piste d'exploration, la variation d'extension rapportée à la période d'exploration précédente précitée; et

5) à partir d'une succession de variations d'extension calculées dans un certain nombre de périodes d'exploration on reconstruit l'allure de l'extension, on l'enregistre sous forme analogique ou numérique et on l'envoie pour une évaluation ultérieure ou à des fins de réglage.

2. Procédé selon la revendication 1, caractérisé par le fait qu'une optique faisant converger les rayons, dont les composants peuvent être identiques au moins partiellement aux composants de l'optique de projection et de déflexion de la lumière, collecte le rayonnement diffusé le long de la piste d'exploration par la surface de l'objet, et qu'une surface de transformateur photo-électrique à réaction rapide transforme en un signal électrique séquentiel l'excitation de rayonnement, localement ou en l'intégrant dans le volume de l'objet par l'intermédiaire d'un angle solide choisi petit par rapport à $4\pi$.

3. Procédé selon la revendication 2, caractérisé en ce que la transformation à l'aide de la surface de transformateur précitée s'effectue dans une surface de section transversale de l'optique faisant converger le rayonnement, dans laquelle un point sur cette surface correspond à une direction de rayonnement dans le volume de l'objet ainsi prédéterminée.

4. Procédé selon les revendications 2 ou 3, caractérisé en ce que les signaux électriques séquentiels fonction du lieu ont leur fréquence limitée par un filtre passe-bande, qui ne transmet plus les périodes de lieu qui sont grandes par rapport à la grandeur du spot d'exploration, et que la fréquence limite supérieure de passage du passe-bande agit comme filtre anti-aliasing par rapport à des signaux d'horloge discrets en temps, commandant un processus d'échantillonnage de signaux.

5. Procédé selon les revendications 1 et 4, caractérisé en ce que les signaux modulés sont transformés par évaluation des valeurs de seuil en signaux discrets en amplitude et sont amenés au corrélateur à l'aide des signaux d'horloge, discrets en temps.

6. Procédé selon la revendication 5, caractérisé en ce que les signaux modulés sont transformés sous forme binaire en signaux discrets en amplitude.

7. Procédé selon la revendication 1, caractérisé en ce qu'on produit des signaux d'horloge discrets en lieu, affectés à des positions du spot de rayonnement, commandés par le processus d'exploration.

8. Procédé selon la revendication 7, caractérisé en ce que les signaux d'horloge discrets en lieu sont équidistants par rapport à la surface de l'objet.

9. Procédé selon les revendications 1 et 7, caractérisé en ce que pour rendre discrets en temps les signaux modulés, on utilise des signaux d'horloge qui sont en relation de phase et de fréquence fixe avec les signaux d'horloge dépendant de la position du spot de rayonnement.

10. Procédé selon les revendications 1, 3 et 5, caractérisé en ce qu'on effectue un enregistrement de nouvelles valeurs de référence pour les corrélations des signaux lorsque les facteurs de corrélation pour les portions de piste d'exploration respectives sont descendus en dessous d'une valeur absolue prédéterminée.

11. Procédé selon les revendications 1, 4, 5 et 10, caractérisé en ce que la portion de piste d'exploration à évaluer est déplacée lorsque les facteurs de corrélation sont descendus en dessous d'une valeur absolue prédéterminée.

12. Procédé selon la revendication 1, 4, 5, 7, 10 et 11, caractérisé en ce que les fonctions de formation des corrélations, de maximisation des fonctions de corrélation, de formation de différence des signaux de corrélation, de traitement et d'enregistrement de l'allure de l'extension sont assurées par une calculatrice automatique programmée.

13. Procédé selon l'une des revendications 1 à 12, caractérisé en ce que, pour poursuivre des processus de charge provoquant des transformations ou des pertubations, on évalue la variation des coefficients de corrélation respectivement maximisés selon la technique des réglages, pour des portions de la piste d'exploration se raccordant l'un à l'autre ou se chevauchant le long de la piste d'exploration, on l'enregistre et on l'amène à un éventuel traitement ultérieur, pour saisir quantitativement des zones de surface présentant des anomalies d'extension ou une déformation plastique.

14. Procédé selon l'une des revendications 1 à 13, caractérisé en ce qu'on explore alternativement au moins deux pistes d'exploration situées l'une à côte de l'autre, de sorte qu'on peut enregistrer un champ d'extension.

15. Dispositif pour mettre en oeuvre le procédé selon l'une des revendications 1 à 14, comportant un système d'éclairage et de projection (1, 2), qui comporte un composant optique déviant les rayons (3) ainsi qu'un système de formation d'images (4), ainsi qu'en outre un système récepteur optique (8) à la suite duquel est monté un transformateur opto-électrique (9) pour recevoir les signaux modulés par la surface de l'objet (7), caractérisé en ce que l'ouverture côté image du système d'éclairage et de projection (1, 2) est adaptée au diamètre du spot d'exploration à diffraction limitée, que l'ouverture libre du système (4) de formation d'images est adaptée, au moins dans le sens de l'exploration, à la zone d'examen sur la surface de l'objet, que la surface de l'objet placée à la suite du système précité (4) est perpendiculaire à la direction des rayons principaux des faisceaux de projection guidés télécentriquement et qu'on prévoit un dispositif (10, 11) pour produire l'impulsion de référence.

16. Dispositif selon la revendication 15, caractérisé en ce que le composant optique (3) déviant les rayons a le point de déviation sur la surface focale du système de formation d'images (4).

17. Dispositif selon la revendication 15 ou 16, caractérisé en ce que le composant optique déviant les rayons est un déflecteur acousto-optique, ou un miroir polygonal ou un miroir rotatif.

18. Dispositif selon l'une des revendications 15 à 17, caractérisé en ce que la courbe tridimensionnelle sur laquelle le foyer du dispositif de projection parcourt la piste d'exploration, est adaptée à la courbure de la surface de l'échantillon grâce aux propriétés de formation d'images du système optique d'éclairage et de projection (1, 2).

19. Dispositif selon l'une des revendications 15 à 18, caractérisé en ce qu'entre la surface de l'échantillon et le transformateur opto-électrique (9) est disposé un système de formation d'images (8) réfléchissant ou diffractant de telle sorte que le transformateur (9) se trouve, sur toute la zone de l'examen, dans la zone du maximum du lobe de diffusion du signal.

20. Dispositif selon l'une des revendications 15 à 19, caractérisé en ce que pour produire des signaux d'horloge un système de fractionnement de rayons est disposé sur le parcours des rayons de projection, lequel système produit une seconde piste d'exploration conjuguée à la surface de l'objet, et que sur cette seconde piste d'exploration est disposé un corps concrétiseur de mesures modulant le rayonnement et qu'à sa suite est monté un autre transformateur opto-électrique (15) qui mesure l'intensité du rayonnement influencée par le corps concrétiseur de mesures.

21. Dispositif selon l'une des revendications 15 à 20, caractérisé en ce que le corps concrétiseur de mesures est un réseau laminaire de phases dont la constante de réseau est adaptée au diamètre du spot d'exploration et provoque une modulation du rayonnement par l'intermédiaire d'une caractérisation de rayons minimaux.

22. Dispositif selon l'une des revendications 15 à 21, caractérisé en ce qu'on dispose sur le parcours des rayons de projection un système de fractionnement de rayons (10) de telle sorte qu'au début d'une période d'exploration, le rayonnement est guidé sur un troisième transformateur opto-électrique (11) qui produit l'impulsion de référence.

Fig. 1

Fig.2